Europäisches Patentamt

European Patent Office

Office européen des brevets

(11) Veröffentlichungsnummer: **0 183 954**
**A2**

## (12) EUROPÄISCHE PATENTANMELDUNG

(21) Anmeldenummer: 85113355.3

(22) Anmeldetag: 22.10.85

(51) Int. Cl.4: **B62D 25/06**

(30) Priorität: 24.11.84 DE 8434422 U

(43) Veröffentlichungstag der Anmeldung:
**11.06.86 Patentblatt 86/24**

(84) Benannte Vertragsstaaten:
**AT BE CH DE FR LI LU NL**

(71) Anmelder: M. Schall GmbH + Co. KG
**Kammweg 1**
**D-5161 Merzenich-Düren(DE)**

(72) Erfinder: **Schall, Matthias**
**Kammweg 1**
**D-5161 Merzenich-Düren(DE)**

(74) Vertreter: **Paul, Dieter-Alfred, Dipl.-Ing.**
**Erftstrasse 82**
**D-4040 Neuss 1(DE)**

(54) **Schutzdach für insbesondere Wohnwagen oder dergleichen.**

(57) Ein Schutzdach für insbesondere Wohnwagen, Wohnmobile, Hütten, Lauben oder dergleichen weist eine Plane mit an zwei gegenüberliegenden Seiten angebrachten Spanneinrichtungen auf, wobei an der Unterseite der Plane Profilstäbe angeordnet sind, die beidseitig Stützfüße zum Abstützen auf dem Dach des Wohnwagens oder dergleichen haben.

Damit zwischen Wohnwagendach und Schutzdachplane zumindest auf einer Seite ein relative großer Abstand eingestellt werden kann, weisen die Stützfüße (24) auf zumindest einer Seite der Profilstäbe (23) und dort zumindest teilweise jeweils wenigstens zwei im Winkel zueinander stehende, gelenkig miteinander verbundene Stützbeine (26, 27) auf, die jeweils durch eine Feststelleinrichtung (28) in verschiedenen Winkelstellungen zueinander fixierbar sind.

Fig. 1

Schutzdach für insbesondere Wohnwagen oder dergleichen

Die Erfindung betrifft ein Schutzdach für insbesondere Wohnwagen, Wohnmobile, Hütten, Lauben oder dergleichen mit einer Plane mit an zwei gegenüberliegenden Seiten angebrachten Spanneinrichtungen, wobei an der Unterseite der Plane Profilstäbe angeordnet sind, die beidseitig Stützfüße zum Abstützen auf dem Dach des Wohnwagens oder dergleichen haben.

Solche Schutzdächer sollen vor allem Wohnwagen vor Witterungseinflüssen, vor allem Sonne, Regen und Schnee, schützen. Hierzu wird die Plane über das Dach des Wohnwagens gelegt, und zwar dergestalt, daß die Profilstäbe sich auf dem Dach über beidseitig angeordnete Stützfüße abstützen können und so für einen Abstand zwischen der Plane und dem Dach sorgen und auf diese Weise eine gute Luftzirkulation bewirken. Die Profilstäbe verlaufen dabei quer zur Längsrichtung der Plane und können auch firstförmig in der Mitte abgeknickt sein, so daß die Plane zu beiden Längsrändern hin leicht abfällt.

An den Querrändern der Plane sind Spanneinrichtungen angebracht. Diese bestehen jeweils aus einem starren Randprofil und daran angebrachten Stützen zur Abstützung gegenüber der Front- bzw. Heckwand sowie aus an den Randprofilen angreifenden Spannseilen, die an entsprechenden Ösen am Wohnwagen eingehakt und dann gespannt werden können. Die Verbindung der Plane mit den Profilstäben kann durch Vernietung oder vorzugsweise durch an der Unterseite der Plane angebrachte Wulstkeder geschehen, die in entsprechend passende Nuten in den Profilstäben einfassen.

Die derzeit verwendeten Stützfüße für die Profilstäbe sind in manchen Fällen zu niedrig, um unter dem Schutzdach Zeltvordächer anbringen zu können. Es ist nämlich erwünscht, daß das Schutzdach diese Zeltvordächer überragen kann, damit das vom Schutzdach bei Regen herunterlaufende Wasser nicht zwischen Zeltvordach und Wohnwagen gelangen kann.

Der Erfindung liegt somit die Aufgabe zugrunde, ein Schutzdach der eingangs genannten Art so zu gestalten, daß zwischen Wohnwagendach und Schutzdachplane zumindest auf einer Seite ein relativ großer Abstand eingestellt werden kann.

Diese Aufgabe wird erfindungsgemäß dadurch gelöst, daß die Stützfüße auf zumindest einer Seite der Profilstäbe und dort zumindest teilweise jeweils wenigstens zwei im Winkel zueinander stehende, gelenkig miteinander verbundene Stützbeine aufweisen, die jeweils durch eine Feststelleinrichtung in verschiedenen Winkelstellungen zueinander fixierbar sind.

Durch diese Ausbildung der Stützfüße läßt sich der Abstand zwischen dem Dach beispielsweise eines Wohnwagens und der Plane des Schutzdaches entsprechend den jeweiligen Bedürfnissen einstellen, in dem die Winkelstellungen zwischen den Stützbeinen entsprechend verändert und in der gewünschten Position mittels der Feststelleinrichtung fixiert werden. Dabei zeichnet sich eine solche Ausführungsform durch Einfachheit in der Herstellung und in der Bedienung aus.

Alternativ zu der vorstehenden Lösung kann die Aufgabe erfindungsgemäß auch dadurch gelöst werden, daß die Stützfüße auf zumindest einer Seite der Profilstäbe und dort zumindest teilweise jeweils wenigstens zwei im Winkel zueinander stehende Stützbeine aufweisen, von denen zumindest eines als Teleskop-Stützbein ausgebildet ist, das jeweils durch eine Feststelleinrichtung in verschiedenen Teleskopstellungen fixierbar ist. Statt durch eine Winkelverstellung der Stützbeine zueinander geschieht hier die Abstandsverstellung zwischen Plane und Dach dadurch, daß zumindest eines der Stützbeine verlängerbar bzw. verkürzbar ist, indem es als Teleskop-Stützbein ausgebildet ist. In beiden Fällen ergibt sich - und dies ist wesentlich - eine Veränderung des Abstandes zwischen den auf den Dach sich abstützenden Enden der Stützbeine, wobei hierdurch eine Höhenverstellung des Stützfußes erreicht wird.

Das bzw. die Teleskop-Stützbein(e) lassen sich in einfachster Ausführungsform durch zwei ineinander schiebbare Rohre herstellen, wobei in Richtung ihrer Längsachse beide Rohre mehrere Querbohrungen aufweisen, durch die als Feststelleinrichtung ein Bolzen, eine Schraube oder ein Splint hindurchgesteckt werden kann.

Selbstverständlich lassen sich beide Alternativen auch miteinander kombinieren, so daß sich die Höhe des Stützfußes einerseits durch Teleskopverstellung zumindest eines der Stützbeine und andererseits durch Winkelverstellung der Stützbeine zueinander verändern läßt. Auf diese Weise kann die jeweils gewünschte Höhe besonders feinfühlig eingestellt werden.

Zweckmäßigerweise sind nur zwei Stützbeine vorhanden, die sich quer zur Längsachse der Profilstäbe erstrecken und so für eine gute Standsicherheit sorgen.

Nach einem weiteren Merkmal der Erfindung ist vorgesehen, daß jeweils beide Stützbeine eines Stützfusses an einem mit dem betreffenden Profilstab verbundenen Koppelstück angelenkt sind, die Stützbeine also nicht direkt miteinander gelenkig verbunden sind. Diese Ausführungsform zeichnet sich durch bsondere Anpassungsfähigkeit an die Formgebung eines Daches an, da Stützbeine, Koppelstück und Feststelleinrichtung einen Viergelenkbogen bilden, der noch eine gewisse Beweglichkeit und somit eine Anpassung der Winkelstellung des Koppelstücks und damit des Profilstabes zu den Stützbeinen zuläßt.

Eine besonders einfache Ausführungsform ergibt sich, wenn das Koppelstück ein U-Profil ist, an dessen Schenkeln die Stützbeine angelenkt und dessen U-Steg mit dem betreffenden Profilstab verbunden ist. Dabei sollte die Ausbildung so getroffen sein, daß zwischen Anlenkung der Stützbeine und U-Steg eine durch alle Stützfüße einer Seite der Profilstäbe hindurchgehende Koppelstange geführt ist. Diese Koppelstange dient dazu, ein Abheben der Stützfüße zu verhindern, wenn sich Wind unter das Schutzdach fängt. Das U-Profil dient dabei gleichzeitig als Führung für diese Koppelstange.

Die Stützbeine sind zweckmäßigerweise über eine Führungsbuchse geschoben, die zwischen den U-Schenkeln verspannt ist, beispielsweise mittels einer durchgehenden Schraube. Die Verbindung zwischen Koppelstücken und Profilstäben geschieht vorteilhafterweise durch Vernietung.

Als besonders einfache Ausführungsform für die Feststelleinrichtung wird ein an den Stützbeinen lösbar befestigtes Lochband vorgeschlagen, wobei die Befestigung durch Verschraubung geschehen kann. Kommen mehr als zwei Stützbeine zur Anwendung, ist eine entsprechende Anzahl von Lochbändern vorzusehen. Statt Lochbänder können selbstverständlich auch Spindeln oder dergleichen vorgesehen sein, wobei allerdings solche Ausführungsformen erheblich teurer sind.

Nach der Erfindung ist schließlich vorgesehen, daß die Stützbeine an ihren freien Enden, die der Abstützung auf dem Dach dienen, eine Kunststoffummantelung aufweisen, damit sie rutschfest und ohne die Gefahr von Beschädigungen aufliegen. Günstig ist dabei die Verwendung eines T-Rohrstückes, da dies noch zusätzliche Standsicherheit gibt. Die offenen Enden können dabei durch Kappen abgedeckt sein.

In der Zeichnung ist die Erfindung an Hand eines Ausführungsbeispiels näher veranschaulicht. Es zeigen:

Figur 1 eine Seitenansicht eines Wohnwagens mit Schutzdach und

Figur 2 eine vergrößerte Seitenansicht eines Details des Schutzdaches gemäß Figur 1.

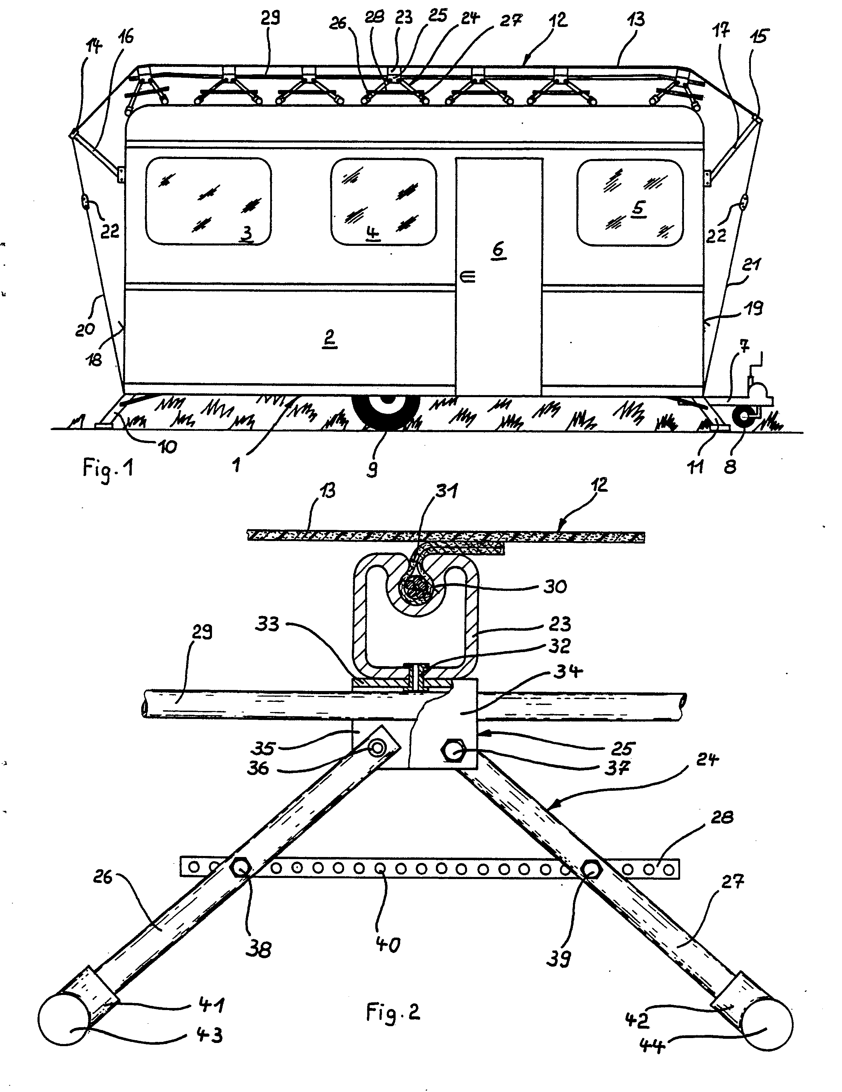

Der in Figur 1 dargestellte Wohnwagen 1 ist von üblicher Bauart. Seine hier sichtbare Seitenwand 2 hat insgesamt drei Fenster 3, 4, 5 sowie eine Eingangstür 6. An der Frontseite ist eine Deichsel 7 mit Stützrad 8 angebracht. Der Wohnwagen 1 ruht auf einer Achse, von der hier eines der beiden Räder 9 zu sehen ist, sowie auf Bodenstützen 10, 11.

Über das Dach des Wohnwagens 1 ist ein Schutzdach 12 gespannt. Das Schutzdach 12 weist eine flexible Plane 13 auf, die aus einem kunststoffbeschichteten Gewebe besteht. Die Kunststoffbeschichtung kann dabei aus einer PVC-Folie und das Gewebe aus Polyester hergestellt sein.

Die Querränder der Plane 13 sind von Endprofilen 14, 15 eingefaßt. Die Endprofile 14, 15 stützen sich jeweils über zwei Streben 16, 17 an der Heckwand 18 bzw. Frontwand 19 des Wohnwagens 1 ab, wobei hier jeweils nur die vorderen Streben 16, 17 zu sehen sind. An den Endprofilen 14, 15 greifen ferner noch jeweils zwei Spannseile 20, 21 an, deren untere Enden an hier nicht sichtbaren Ösen an der Wagenunterseite eingehakt sind. Die Spannseile 20, 21 können mittels üblicher Spannblöcke 22 gespannt werden.

An der Unterseite der Plane 13 sind insgesamt sieben Profilstäbe, beispielhaft mit 23 bezeichnet, angebracht. Ihre nähere Ausbildung und ihre Verbindung zu der Plane 13 ergibt sich aus Figur 2. An der Unterseite der Profilstäbe 23 sind Stützfüße, beispielhaft mit 24 bezeichnet, befestigt. Jeder Stützfuß 24 besteht - wie sich im Detail noch aus Figur 2 ergibt - aus einem kurzen U-Profil 25, das jeweils mit dem betreffenden Profilstab 23 vernietet ist, zwei an dem U-Profil 25 angelenkten Stützbeinen 26, 27 und einem beide Stützbeine 26, 27 miteinander verbindenden Lochband 28. Durch die U-Profile 25 sämtlicher Stützfüße 24 ist zusätzlich noch eine durchgehende Koppelstange 29 geführt, die die Stützfüße 24 miteinander verbinden und so ein Abheben des Schutzdaches 12 vom Dach des Wohnwagens 1 weitestgehend verhindert.

Auf der hier nicht sichtbaren anderen Seite des Schutzdaches 12 können - weil dort normalerweise kein Vorzelt angebracht wird - normale, niedrigere Stützfüße vorgesehen sein, wobei auch diese durch eine Koppelstange miteinander verbunden sind.

Figur 2 zeigt den Profilstab 23 und den Stützfuß 24 in vergrößerter Darstellung. Der Profilstab 23 weist einen im wesentlichen rechteckigen, geschlossenen Querschnitt auf. In die Oberseite des Profilstabes 23 ist eine Längsnut 30 eingeformt, die im wesentlichen kreisförmigen Querschnitt hat, der an seiner breitesten Stelle breiter ist als die Breite des Schlitzes an der Oberseite des Profilstabes 23. Auf diese Weise ergeben sich Hinterschneidungen.

In die Längsnut 30 des Profilstabes 23 ist der verdickte Wulst eines Wulstkeders 31 eingeschoben. Der Wulstkeder 31 ist an der Unterseite der Plane 13 angeschweißt.

An der Unterseite des Profilstabes 23 ist das U-Profil 25 über eine Niet 32 befestigt, so daß der U-Steg 33 dort fest anliegt. Zwischen die U-Schenkel 34, 35 - von denen der in dieser Ansicht vordere U-Schenkel 34 teilweise weggeschnitten ist - sind die obenseitigen Enden der Stützbeine 26, 27 derart angelenkt, daß sie in der durch sie gehenden Vertikalebene verschwenkbar sind. Sie sind dabei über je eine Führungsbuchse 36 geschoben - von der hier nur eine zu sehen ist -, die zwischen den U-Schenkeln 34, 35 mittels durch sie hindurchgehende Schrauben 37 - von der hier ebenfalls nur eine zu sehen ist - verspannt sind.

Die Stützbeine 26, 27 verlaufen von oben nach unten V-förmig auseinander, wodurch sich eine breite Abstützbasis ergibt. Etwa in ihrer Mitte sind beide über Schrauben 38, 39 mit dem Lochband 28 verbunden, das relativ dünn ausgebildet sein kann, da es praktisch nur auf Zug beansprucht wird. Das Lochband 28 weist eine Vielzahl von Löchern 40 auf, über die es mit den Stützbeinen 26, 27 verschraubt werden kann. Auf diese Weise läßt sich der Abstand zwischen den Schrauben 38, 39 einstellen, was wiederum zur Folge hat, daß sich entsprechende Winkel zwischen den Stützbeinen 26, 27 einstellen. Je kleiner der Abstand der Schrauben 38, 39 am Lochband 28 und damit der Winkel zwischen den Stützbeinen 26, 27 ist, desto größer wird der Abstand zwischen Wohnwagendach und Plane 13, und umgekehrt.

Im übrigen bilden die gelenkigen Verbindungspunkte der Stützbeine 26, 27 am Lochband 28 und an dem U-Profil 25 einen Viergelenkbogen, der zwischen den Stützbeinen 26, 27 und dem U-Profil 25 eine gewisse Beweglichkeit zuläßt. Auf diese Weise können sich das U-Profil 25 und damit der Profilstab 23 in ihren Winkelstellungen entsprechend dem jeweiligen Verlauf der Plane 13 anpassen, was insbesondere im Übergangsbereich vom Dach zur Heckwand 18 bzw. Frontwand 19 des Wohnwagens 1 günstig ist.

Durch die teilweise Wegnahme des vorderen U-Schenkels 34 ist zudem zu sehen, wie die Koppelstange 29 zwischen den Anlenkpunkten der Stützbeine 26, 27 und dem U-Steg 33 hindurchläuft, wodurch sich auf einfache Weise eine Führung der Koppelstange 29 ergibt.

Die Stützbeine 26, 27 bestehen aus runden Rohren, an deren freien Unterseiten T-Rohrstücke 41, 42 aufgesetzt sind, die in handelsüblicher Weise aus Kunststoff bestehen. Auf diese Weise ergibt sich jeweils eine Erstreckung in Längsrichtung des Profilstabes 23, was die Abstützung des Stützfußes 24 verbessert und ein Eindrücken in das Wohnwagendach verhindert. Die Endöffnungen der T-Rohrstücke 41, 42 sind durch Kunststoffkappen 43, 44 verschlossen.

Im übrigen bestehen die Stützfüße 24 ebenso wie die Koppelstange 29 und die Profilstäbe 23 einschließlich der Nieten 32 aus einer Aluminiumlegierung, so daß praktisch keine Korrosion auftreten kann.

**Ansprüche**

1. Schutzdach für insbesondere Wohnwagen, Wohnmobile, Hütten, Lauben oder dergleichen mit einer Plane mit an zwei gegenüberliegenden Seiten angebrachten Spanneinrichtungen, wobei an der Unterseite der Plane Profilstäbe angeordnet sind, die beidseitig Stützfüße zum Abstützen auf dem Dach des Wohnwagens oder dergleichen haben, dadurch gekennzeichnet, daß die Stützfüße (24) auf zumindest einer Seite der Profilstäbe (23) und dort zumindest teilweise jeweils wenigstens zwei im Winkel zueinander stehende, gelenkig miteinander verbundene Stützbeine (26, 27) aufweisen, die jeweils durch eine Feststelleinrichtung (28) in verschiedenen Winkelstellungen zueinander fixierbar sind.

2. Schutzdach für insbesondere Wohnwagen, Wohnmobile, Hütten, Lauben oder dergleichen mit einer Plane mit an zwei gegenüberliegenden Seiten angebrachten Spanneinrichtungen, wobei an der Unterseite der Plane Profilstäbe angeordnet sind, die beidseitig Stützfüße zum Abstützen auf dem Dach des Wohnwagens oder dergleichen haben, auch nach Anspruch 1, dadurch gekennzeichnet, daß die Stützfüße auf zumindest einer Seite der Profilstäbe und dort zumindest teilweise jeweils wenigstens zwei im Winkel zueinander stehende Stützbeine aufweisen, von denen zumindest eines als Teleskop-Stützbein ausgebildet ist, das jeweils durch eine Feststelleinrichtung in verschiedenen Teleskopstellungen fixierbar ist.

3. Schutzdach nach Anspruch 1 oder 2, dadurch gekennzeichnet, daß sich die Stützbeine (26, 27) quer zur Längsachse der Profilstäbe (23) erstrekken.

4. Schutzdach nach einem der Ansprüche 1 bis 3, dadurch gekennzeichnet, daß jeweils beide Stützbeine (26, 27) eines Stützfußes (24) an einem mit dem betreffenden Profilstab (23) verbundenen Kuppelstück (25) angelenkt sind.

5. Schutzdach nach Anspruch 4, dadurch gekennzeichnet, daß das Kuppelstück ein U-Profil (25) ist, an dessen U-Schenkeln (34, 35) die Stützbeine (26, 27) angelenkt und dessen U-Steg (33) mit dem betreffenden Profilstab (23) verbunden ist.

6. Schutzdach nach Anspruch 5, dadurch gekennzeichnet, daß zwischen Anlenkung der Stützbeine (26, 27) und U-Steg (33) eine durch alle Stützfüße (24) einer Seite der Profilstäbe (23) hindurchgehende Koppelstange (29) geführt ist.

7. Schutzdach nach Anspruch 5 oder 6, dadurch gekennzeichnet, daß die Stützbeine (26, 27) über eine Führungsbuchse (36) geschoben sind, die zwischen den U-Schenkeln (34, 35) verspannt ist.

8. Schutzdach nach einem der Ansprüch 4 bis 7, dadurch gekennzeichnet, daß die Kuppelstücke (25 mit den Profilstäben (23) vernietet sind.

9. Schutzdach nach einem der Ansprüche 1 bis 8, dadurch gekennzeichnet, daß die Feststelleinrichtung jeweils aus einem an den Stützbeinen (26, 27) lösbar befestigten Lochband (28) besteht.

10. Schutzdach nach Anspruch 9, dadurch gekennzeichnet, daß das Lochband (28) mit den Stützbeinen (26, 27) verschraubt ist.

11. Schutzdach nach einem der Ansprüche 1 bis 10, dadurch gekennzeichnet, daß die Stützbeine (26, 27) an ihren freien Enden eine Kunststoffummantelung (41, 42) aufweisen

12. Schutzdach nach Anspruch 11, dadurch gekennzeichnet, daß die Kunststoffummantelung aus einem T-Rohrstück (41, 42) besteht.

Fig. 1

Fig. 2